(19) **Europäisches Patentamt European Patent Office Office européen des brevets**

(11) **EP 4 554 709 B1**

(12) **FASCICULE DE BREVET EUROPEEN**

(45) Date de publication et mention de la délivrance du brevet:
**29.04.2026 Bulletin 2026/18**

(21) Numéro de dépôt: **23748826.7**

(22) Date de dépôt: **10.07.2023**

(51) Classification Internationale des Brevets (IPC):
**B01F 27/91** (2022.01)    **B65G 53/24** (2006.01)
**B65G 53/30** (2006.01)    **B65G 53/52** (2006.01)
**G01G 19/30** (2006.01)

(52) Classification Coopérative des Brevets (CPC):
**G01G 19/30; B01F 23/56; B01F 23/806; B01F 27/91;** B65G 53/60; G01G 19/18

(86) Numéro de dépôt international:
**PCT/FR2023/051067**

(87) Numéro de publication internationale:
**WO 2024/013450 (18.01.2024 Gazette 2024/03)**

(54) **PROCÉDÉ DE DOSAGE DE POUDRES**

PULVERDOSIERVERFAHREN

POWDER DOSING METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **11.07.2022 FR 2207101**

(43) Date de publication de la demande:
**21.05.2025 Bulletin 2025/21**

(73) Titulaire: **Commissariat à l'Energie Atomique et aux Energies Alternatives**
**75015 Paris (FR)**

(72) Inventeurs:
- **BROTHIER, Meryl**
  **13100 AIX-EN-PROVENCE (FR)**
- **VAUDEZ, Stéphane**
  **84000 AVIGNON (FR)**

(74) Mandataire: **Santarelli**
**Tour Trinity**
**1 bis Place de la Défense**
**92400 Courbevoie (FR)**

(56) Documents cités:
EP-B1- 0 732 643    WO-A1-2022/208023
DE-A1- 4 220 014    US-A- 4 474 905

## Description

## DOMAINE TECHNIQUE

L'invention se rapporte au domaine du dosage des poudres, et spécifiquement des poudres non coulables qui peuvent être de tout type connu, notamment de forte densité et/ou cohésives.

Elle s'applique à tout procédé industriel mettant en œuvre des poudres, particulièrement des poudres non coulables. Elle concerne un procédé de dosage de poudres non coulables et un dispositif associé.

## ART ANTÉRIEUR

Classiquement, différentes façons permettent d'accomplir la fonction de dosage de poudres qui sont présentées ci-après selon quatre concepts.

Premièrement, les systèmes de dosage par godet sont composés par des godets ou formes doseuses telles que volets tournants, écluses à poudre, entre autres. Ce type de solution est par exemple décrite dans l'article intitulé « Manutention mécanique continue de produit en vrac », Claude SAUDEMONT, Techniques de l'ingénieur, Référence AG7511 v1, 10 juillet 2002. Ces systèmes présentent aussi plusieurs inconvénients. Ils peuvent induire un dosage dépendant de l'état granulaire des poudres à doser, notamment du niveau d'agglomération, de la densité apparente, entre autres. De plus, ils entraînent un dosage par à coup.

Par ailleurs, les systèmes de dosage à vis sont composés de vis sans fin ou dites aussi vis d'Archimède qui du fait de leur mouvement rotatif permettent de pousser entre chaque pas de vis un volume de milieu granulaire. Ces systèmes présentent néanmoins plusieurs inconvénients. D'une part, ils ne sont opérants que pour des poudres de coulabilité minimale. D'autre part, ils entraînent une modification du milieu granulaire du fait des impacts au droit des coudes de tuyauteries. De plus, ils peuvent entraîner un risque de bouchage et ne permettent qu'un dosage par à coup, à savoir à chaque pas de vis.

En outre, les systèmes de dosage à plan vibrant sont composés par des mobiles soumis le plus souvent à des mouvements vibrationnels oscillants pour prélever le milieu granulaire d'une manière aussi continue que possible. Ce type de solution est par exemple décrite dans la thèse « Modélisation du comportement dynamique d'un plancher vibrant : interaction avec le milieu granulaire, Benoît GELY, Thèse de l'Université Sigma Clermont Auvergne, septembre 2017. Ces systèmes présentent également plusieurs inconvénients. Ils peuvent induire de la ségrégation et sont sensibles au milieu granulaire.

Les systèmes de dosage par lit transporté ou fluidisé sont enfin des systèmes au sein desquels la poudre à doser est soumise à un flux de gaz permettant de former une suspension de gaz avec le milieu granulaire qui est ensuite soutiré. Ces systèmes ont également des inconvénients. En effet, ils peuvent conduire à un dosage non fonctionnel pour un milieu non fluidisable et peut aussi entraîner la ségrégation des poudres. On entend par « fluidisable », le fait qu'une poudre appartienne à la classe A ou B de la classification de GELDART telle que par exemple décrite dans l'article « Caractérisation et analyse des poudres - Propriétés physiques des solides divisés », K. Saleh, P. Guigon, Techniques de l'Ingénieur, 10 mars 2009.

Ainsi, les quatre types de solutions au problème du dosage de poudres ne sont pas entièrement satisfaisants, voire pas du tout pour le dosage de poudres non coulables.

En particulier, lors de la mise en œuvre de poudres difficilement coulables, voire pas coulables, la plupart des dispositifs de dosage connus de l'art antérieur, notamment les écluses, les godets, les vis sans fin, induisent des courbes de distribution de la matière en « escalier ». Ces distributions sont discontinues et procèdent par à coup. Pour un certain nombre d'applications, telles que le dosage de principe actif dans les médicaments, le dosage de réactifs sensibles comme des explosifs, entre autres, un dosage discontinu n'est pas acceptable, notamment du fait de l'existence de trop d'impacts en cas d'hétérogénéité des concentrations de matière dans les produits à élaborer.

On note ainsi qu'il demeure spécifiquement un besoin pour accomplir la fonction de dosage d'un milieu granulaire non coulable, ou du moins peu coulable, avec notamment les exigences suivantes : de manière rapide, continue, précise en terme de débit distribué, même avec des milieux granulaires réputés non coulables ou fluidisables ; sans risque de dispersion de fines particules constitutives du milieu granulaire à doser ; quelle que soit la coulabilité ou le caractère fluidisable de la poudre à doser ; sans induire de ségrégation du milieu granulaire à doser ; sans compaction du milieu granulaire.

On connait par ailleurs d'autres procédés et dispositifs de broyage cryogénique des demandes de brevet français FR 3 072 307 A1 et FR 3 072 308 A1 pour lesquels les paramètres de fonctionnement ne sont pas satisfaisants au regard des besoins énoncés. Un procédé de dosage de poudres et un dispositif de dosage de poudres selon l'art antérieur sont divulgués dans le document EP0732643.

## EXPOSÉ DE L'INVENTION

En conséquence, l'invention vise à répondre au moins partiellement aux besoins mentionnés précédemment et à remédier aux inconvénients relatifs aux réalisations de l'art antérieur.

Spécifiquement, l'invention vise notamment à pouvoir être en mesure de doser un milieu granulaire aussi précisément que s'il s'agissait d'un fluide mais sans induire d'effluent liquide à traiter et sans avoir ensuite à devoir séparer d'une manière coûteuse et/ou longue la poudre du fluide vecteur qui pourrait être employé pour cela. Elle vise aussi à pouvoir doser tout type de poudre, d'une granulométrie pouvant aller de quelques nanomètres à quelques centimètres, et pour des densités variables sans limitation, pouvant être très peu dense ou au contraire très dense. De même, l'invention vise à limiter tout risque d'introduction d'impuretés à l'issue du dosage et à permettre un inertage du milieu granulaire.

Aussi, l'invention a pour objet, selon l'un de ses aspects, un procédé de dosage de poudres non coulables, caractérisé en ce qu'il comporte les étapes suivantes :

a) introduction d'un fluide cryogénique, de poudres à doser et de dioxyde de carbone sous forme solide dans un système de mélange et de mise en suspension, le diamètre moyen de la granulométrie du dioxyde de carbone sous forme solide étant compris entre 0,1 et 10 fois celui de la granulométrie des poudres à doser,

b) mélange et mise en suspension des poudres avec le fluide cryogénique et le dioxyde de carbone sous forme solide, pour l'obtention d'une suspension cryogénique, la proportion en masse volumique des poudres vérifiant l'équation (i) suivante :

$$(i) : 10\% < [poudres]_{vol} < 80\%,$$

où :

$[poudres]_{vol}$ est la proportion en masse volumique des poudres,

c) évacuation de la suspension cryogénique, comprenant le soutirage de la suspension cryogénique, notamment dans des conditions de température supérieure ou égale à la température ambiante et de pression inférieure ou égale à la pression atmosphérique,

d) pilotage du dosage des poudres en fonction d'un ou plusieurs paramètres liés à l'étape b) de mélange et mise en suspension,

e) dosage des poudres.

Le procédé de dosage selon l'invention est ainsi adapté aux poudres qualifiées de « non coulables ». La notion de « coulabilité » correspond à la propriété d'un milieu granulaire à s'écouler naturellement. Elle peut être caractérisée par plusieurs méthodes. L'une d'elles peut être issue d'une mesure de type indice de Carr. Par définition, cet indice est déterminé comme le rapport entre la différence entre le volume apparent occupé par une quantité donnée de poudres et le volume tassé de la même quantité de poudres, le tout normé sur le volume apparent. Au-delà d'un indice de Carr de 25, le milieu granulaire est classiquement considéré comme très peu coulable. En dessous d'un indice de Carr de 15, le milieu granulaire est considéré comme relativement bien coulable. Ainsi, au sens de l'invention, on entend par poudres non coulables des poudres dont l'indice de Carr est strictement supérieur à 15, et préférentiellement supérieur ou égal à 25.

En outre, la notion de « diamètre moyen » d'un milieu granulaire est utilisée dans la mesure où le milieu granulaire considéré n'est pas constitué de particules solides ayant toutes la même taille et non généralement strictement sphérique. La granulométrie est dans ce cas une distribution de taille, de surface, voire de volume équivalent. A cette distribution statique, il est possible d'associer une notion de dimension moyenne appelée aussi « diamètre moyen ». Une telle notion est par exemple décrite dans l'article « Caractérisation de la taille des particules », John DODDS, Gérard BALUAIS, Sciences Géologiques, bulletins et mémoires, 46-1-4 pages 79-104, 1993.

Le choix de la gamme de valeurs du diamètre moyen de la granulométrie du dioxyde de carbone sous forme solide par rapport à celui de la granulométrie des poudres à doser est avantageux en ce qu'il résulte de la prise en compte d'un nombre important de facteurs et de phénomènes physique, intégrant concomitamment des critères rhéologiques, de stabilité à la sédimentation et d'efficacité énergétique.

En ce qui concerne l'aspect rhéologique, il doit être pris en compte notamment en termes de viscosité et de comportement global à l'écoulement. Pour ce qui concerne la viscosité, elle est corrélée à la taille des particules mais aussi au taux d'incorporation (quantité de matière solide dans un volume donné de liquide). S'il peut exister un lien entre taille des particules et viscosité, ce lien n'est cependant pas direct lorsque les solides en suspension ne sont pas strictement monomodaux (cas monomodal uniquement quand les poudres sont dites poudres modèles, ce qui n'est pas le cas dans les cas réels d'usage industriel). Or, les poudres réelles à transporter ne sont pas monomodales et le dioxyde de carbone solide ne peut par ailleurs pas avoir strictement la même granulométrie que la poudre à transporter (en diamètre moyen et/ou en étendue granulométrique). Dès lors, il est important de pouvoir ajuster le diamètre moyen du dioxyde de carbone pour obtenir une suspension qui soit de viscosité acceptable pour être mise en circulation au travers de système hydraulique sans dépenser trop d'énergie pour cela. Cet ajustement ne peut être connu *a priori* et doit faire l'objet de réglage au cas par cas. Par ailleurs, le taux d'incorporation, la polydispersité des solides, voire leurs morphologies, jouent aussi sur le comportement global de la suspension en écoulement. Il n'existe pas de corrélation directe entre tous ces paramètres et le comportement de la suspension qui peut être soit à comportement newtonien, soit rhéo-épaississant, rhéo-fluidisant, voire thixotropique. Idéalement, on recherchera un comportement newtonien mais certains systèmes ne peuvent s'en approcher aisément.

En ce qui concerne la stabilité à la sédimentation, le comportement de suspension en milieu gaz liquéfié n'est pas connu de l'Homme de l'art. En effet, ce type de suspension n'induit pas d'interaction de charge électrique entre le liquide et le solide (le liquide gaz liquéfié étant totalement anionique et exempt de couche d'inversion de charge comme dans des liquides classiques). Dans le cas de solides très fins (inférieurs au micron, voire de quelques centaines de nanomètres), des comportements atypiques peuvent se créer (impact du mouvement brownien par exemple). Il se peut également qu'il puisse y avoir agglomération d'agrégats de matière solide qui conduise ensuite à une sédimentation accélérée de la phase solide. Si le dioxyde de carbone utilisé au lieu d'être très fin est relativement grossier par rapport à la poudre transportée, cela peut permettre d'éviter ces phénomènes mais en contrepartie le mélange perdra de son homogénéité, ce qui n'est pas favorable pour la fonction de transport visée. A noter par ailleurs que si le diamètre moyen du dioxyde de carbone solide est trop important, cette phase va être impactée (par exemple de mélange, fortes pertes de charges induites, ...) par les passages étroits des circuits hydrauliques permettant de véhiculer la suspension.

Pour prendre en compte l'ensemble de ces paramètres et phénomènes, le diamètre moyen de la granulométrie du dioxyde de carbone sous forme solide est compris entre 0,1 et 10 fois celui de la granulométrie des poudres à doser. Plus préférentiellement, pour avoir un compromis plus optimisé notamment entre rhéologie et stabilité à la décantation, le diamètre moyen de la granulométrie du dioxyde de carbone sous forme solide peut être compris entre 1 et 8 fois celui de la granulométrie des poudres à doser, notamment entre 2 et 6 fois celui de la granulométrie des poudres à doser.

En outre, les conditions de l'équation (i) donnée ci-dessus permettent avantageusement l'obtention d'une suspension cryogénique stable et pompable. Aussi, de façon avantageuse, la suspension cryogénique est stable et pompable grâce aux conditions posées dans l'invention concernant le diamètre moyen de la granulométrie du dioxyde de carbone sous forme solide et la proportion en masse volumique des poudres.

Il faut noter que par « stable », on entend qu'une suspension est considérée comme stable lorsque le temps nécessaire à la décantation complète de la suspension est au moins dix fois supérieur au temps de l'opération de transport, ou transfert, de celle-ci. Typiquement, dans le cadre de l'invention, la durée de transport, ou transfert, de poudres peut être de l'ordre de quelques minutes tandis que la durée de stabilité peut être de l'ordre d'une heure.

Avantageusement, la présence de dioxyde de carbone sous forme solide dans la suspension cryogénique peut permettre de jouer le rôle de stabilisateur stérique des poudres afin d'éviter leur sédimentation.

Il faut noter que par « pompable », on entend la capacité d'une formulation à être mise en œuvre par le biais d'un système de pompage classique, telle qu'une pompe à piston ou rotor. Il faut toutefois noter qu'une suspension caractérisée comme « pompable » n'est pas nécessairement destinée à être pompée mais est apte à l'être au besoin. Cette notion de « pompable » apparaît par exemple dans la présentation intitulée « Formulation, homogénéité et pompabilité », François DE LARRARD, BétonlabPro 3, Leçon N°13, Laboratoire Central des Ponts et Chaussées - Centre de Nantes (LCPC). De manière plus intrinsèque, une suspension est considérée comme « pompable » dans la mesure où la force motrice accessible par les systèmes de pompage classiques (notamment pompe à piston ou à rotor) pour permettre son déplacement dans un circuit donné est supérieure à la force de freinage induite par la viscosité de la suspension. Classiquement, une suspension ayant une viscosité de l'ordre de 100 000 mPa.s est considérée comme non pompable. Une suspension ayant une viscosité inférieure à 20 000 mPa.s est considérée comme pompable.

Le procédé selon l'invention peut en outre comporter l'une ou plusieurs des caractéristiques suivantes prises isolément ou suivant toutes combinaisons techniques possibles.

De façon avantageuse, le fluide cryogénique est un gaz liquéfié à température et pression ambiantes. Il peut notamment être de l'azote ($N_2$) liquide. Toutefois, ce choix n'est pas limitatif. Le fluide cryogénique permet de définir le comportement fluidique, notamment liquide, de la suspension cryogénique et permet, le cas échéant, de maintenir le dioxyde de carbone ($CO_2$) sous forme solide.

Par ailleurs, le dioxyde de carbone solide, encore appelé glace carbonique, peut se présenter sous forme de granulés et/ou de poudres. Cette glace carbonique permet, par son encombrement ou taux d'occupation dans la suspension cryogénique, de stabiliser les poudres à doser.

La première étape a) peut avantageusement comporter les sous-étapes successives suivantes :

a1) introduction du fluide cryogénique et du dioxyde de carbone sous forme solide dans le système de mélange et de mise en suspension, puis
a2) introduction de poudres à doser dans le système de mélange et de mise en suspension.

Avantageusement, l'introduction du fluide cryogénique et du dioxyde de carbone, préférentiellement réalisée de manière simultanée, précède l'introduction des poudres à doser.

La durée entre les deux sous-étapes a1) et a2) peut être très courte, notamment de l'ordre de quelques secondes, et ainsi la deuxième sous-étape a2) peut être réalisée quasiment immédiatement après la première sous-étape a1).

Néanmoins, de façon générale, la durée entre les deux sous-étapes a1) et a2) peut dépendre du temps mis pour obtenir une suspension homogénéisée et de bonne qualité entre le fluide cryogénique et le dioxyde de carbone. En particulier, la deuxième sous-étape a2) peut être mise en œuvre lorsque le couple d'agitation du mélange entre le fluide cryogénique et le dioxyde de carbone est sensiblement constant, notamment avec une variabilité inférieure à 10 %, mieux encore 5 %.

L'évacuation de la suspension cryogénique correspond avantageusement à un déplacement de la suspension cryogénique pour permettre son évacuation. Elle peut ainsi comprendre le soutirage de la suspension cryogénique et également la volatilisation de la suspension cryogénique. La volatilisation peut être induite par les conditions de température et de pression mises en place lors de l'évacuation ou bien encore être obtenue par le biais de moyens de volatilisation prévus à cet effet.

Par ailleurs, Le taux de charge en dioxyde de carbone sous forme solide peut être compris entre 0,1 et 10 fois celui en poudres à transporter.

L'étape d) de pilotage du dosage des poudres peut permettre l'acquisition et le traitement de la mesure du couple d'agitation de la suspension cryogénique, pour permettre une ou plusieurs actions de pilotage sur un ou plusieurs organes pilotables.

Par ailleurs, l'invention a encore pour objet, selon un autre de ses aspects, un dispositif de dosage de poudres non coulables pour la mise en œuvre du procédé de dosage de poudres non coulables tel que défini précédemment, caractérisé en ce qu'il comporte :

- un système d'alimentation en poudres, en dioxyde de carbone sous forme solide et en fluide cryogénique, comportant des moyens d'introduction contrôlée des poudres à doser et des moyens d'introduction contrôlée de dioxyde de carbone sous forme solide,
- un système de mélange et de mise en suspension des poudres, du dioxyde de carbone sous forme solide et du fluide cryogénique pour l'obtention d'une suspension cryogénique,
- un système d'évacuation de la suspension cryogénique, comprenant un dispositif de soutirage de la suspension cryogénique associé à un débitmètre massique,
- un système de pilotage du dosage des poudres.

Le système de mélange et de mise en suspension peut en outre comprendre : une cuve de mélange ; un dispositif de mélange et de brassage, situé à l'intérieur de la cuve de mélange ; un moyen de mesure du niveau de la suspension cryogénique formée, au moins en partie situé à l'intérieur de la cuve de mélange.

Par ailleurs, le système de mélange et de mise en suspension peut comprendre un système de surveillance optique pour contrôler l'homogénéité de concentration dans la suspension cryogénique.

## DESCRIPTION DES FIGURES

L'invention pourra être mieux comprise à la lecture de la description détaillée des exemples de mise en œuvre non limitatifs de celle-ci et à l'examen des figures, schématiques et partielles, sur lesquelles :

[Fig. 1] représente un logigramme simplifié du principe de dosage avec un dispositif de dosage pour la mise en œuvre d'un procédé de dosage conforme à l'invention,

[Fig. 2] illustre schématiquement un exemple de dispositif de dosage de poudres non coulables pour la mise en œuvre d'un procédé de dosage conforme à l'invention,

[Fig. 3A] est une vue schématique selon un plan de coupe selon l'axe Z de la figure 2

et la [Fig. 3B] est une vue schématique à gauche de la vue en coupe de la figure 3A, illustrant le principe de volatisation et d'évaporation de la suspension cryogénique,

[Fig. 4A],

[Fig. 4B]

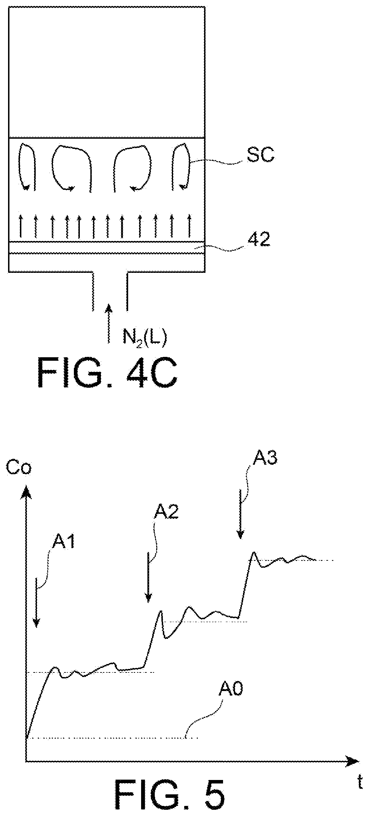

et [Fig. 4C] illustrent, selon des vues en coupe, des variantes possibles de dispositifs de mélange et de brassage pour le système de mélange et de mise en suspension d'un dispositif de dosage pour la mise en œuvre d'un procédé de dosage conforme à l'invention,

[Fig. 5] illustre graphiquement l'évolution du couple d'agitation de la suspension cryogénique en fonction du temps d'agitation et de trois introductions de charge solide,

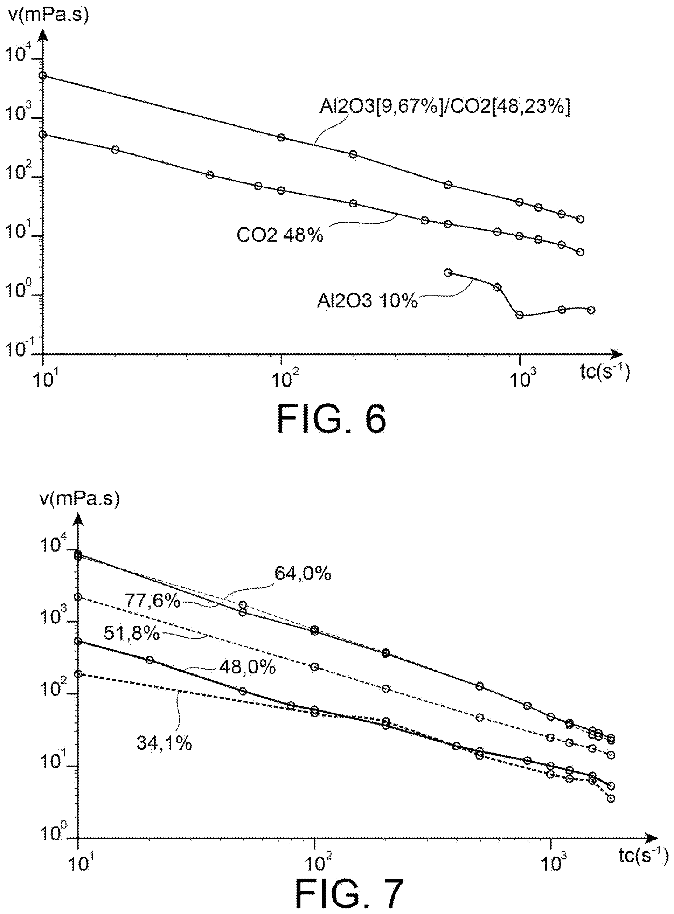

[Fig. 6] représente l'évolution de la viscosité en fonction du taux de cisaillement pour des suspensions d'alumine et glace carbonique dans l'azote liquide, et

[Fig. 7] représente l'évolution de la viscosité en fonction du taux de cisaillement pour différentes concentrations de suspensions de glace carbonique dans l'azote liquide.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## EXPOSÉ DES MODES DE RÉALISATION

Le fluide cryogénique FC est ici de l'azote liquéfié ($N_2$) mais ce choix n'est pas limitatif.

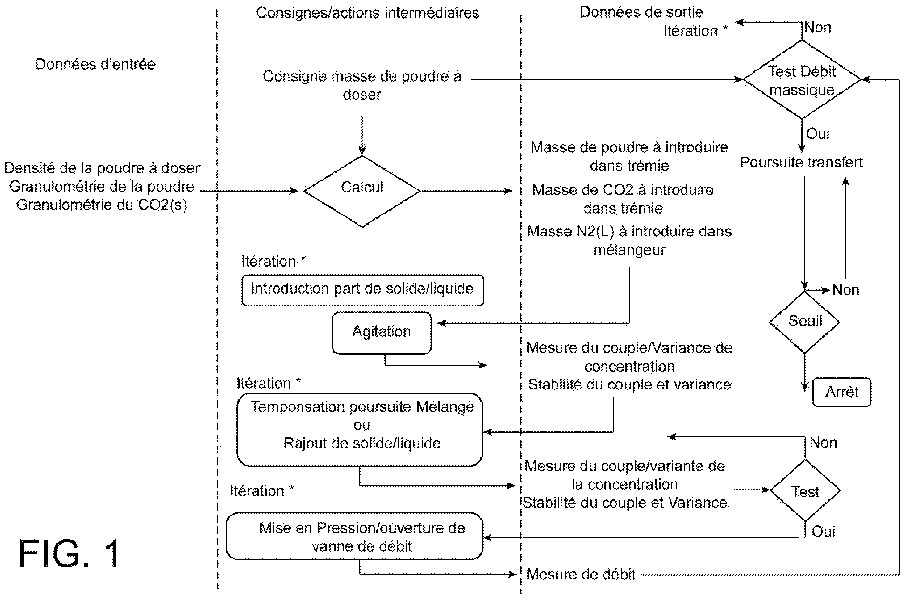

La figure 1 est un logigramme simplifié du pilotage nécessaire à la bonne conduite du dosage pour préciser la séquence des mesures et des données d'entrée et de sortie nécessaires au pilotage du dosage d'un dispositif de dosage pour la mise en œuvre d'un procédé de dosage selon l'invention.

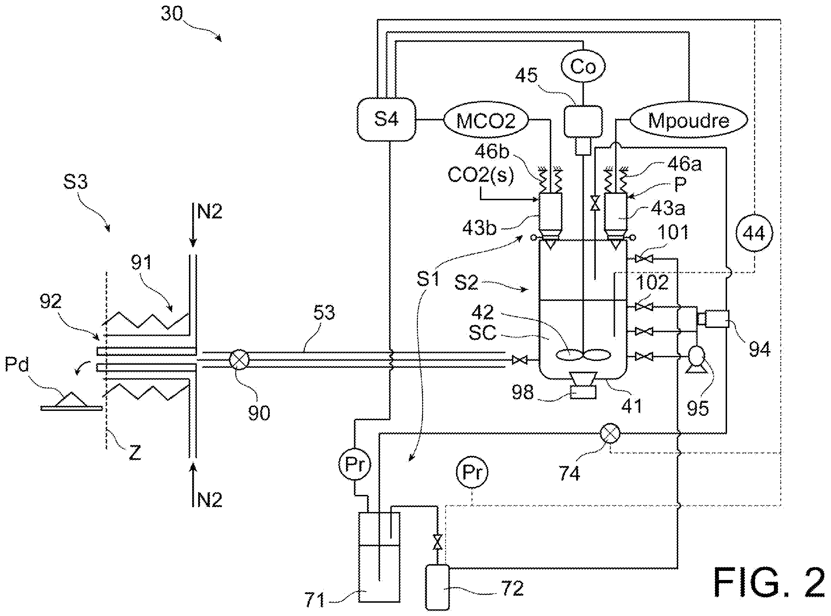

La figure 2 représente un exemple de dispositif 30 de dosage de poudres P non coulables pour la mise en œuvre d'un procédé de dosage conforme à l'invention. Celui-ci comporte tout d'abord un système d'alimentation S1 en poudres P et en fluide cryogénique FC, lequel comporte des moyens d'introduction contrôlée 43a des poudres P à doser et, dans cet exemple, des moyens d'introduction contrôlée 43b de dioxyde de carbone sous forme solide $CO_2(s)$.

En outre, le dispositif 30 comporte un système de mélange et de mise en suspension S2 des poudres P, du fluide cryogénique FC et du dioxyde de carbone sous forme solide $CO_2(s)$ pour l'obtention d'une suspension cryogénique SC. Il comporte aussi un système d'évacuation S3 de la suspension cryogénique SC, et enfin un système de pilotage S4 du dosage des poudres P.

Par ailleurs, le système d'évacuation S3 de la suspension cryogénique SC comprend un dispositif de soutirage et, dans cet exemple, de volatilisation 91, 92 de la suspension cryogénique SC associé à un débitmètre massique 90. Il faut qu'en variante la volatilisation peut être obtenue spontanément sans le biais de moyens de volatilisation dédiés par les conditions de température et de pression appliquées. En particulier, la température peut être supérieure ou égale à la température ambiante et la pression peut être inférieure ou égale à la pression atmosphérique.

Le système de pilotage S4 est configuré pour permettre l'acquisition et le traitement de la mesure du couple d'agitation Co de la suspension cryogénique SC.

Un tel dispositif 30 permet de mettre en œuvre le procédé conforme à l'invention. Ainsi, une étape a) permet l'introduction du fluide cryogénique FC, des poudres P à doser et du dioxyde de carbone sous forme solide $CO_2(s)$ dans le système de mélange et de mise en suspension S2.

Cette étape a) peut être réalisée avec une introduction simultanée des constituants. Toutefois, de façon avantageuse, l'étape a) comporte deux sous-étapes successives : une étape a1) d'introduction du fluide cryogénique FC et du dioxyde de carbone sous forme solide $CO_2(s)$ dans le système de mélange et de mise en suspension S2, puis une étape a2) d'introduction de poudres P à doser dans le système de mélange et de mise en suspension S2.

Avantageusement, le diamètre moyen de la granulométrie du dioxyde de carbone sous forme solide $CO_2(s)$ est compris entre 0,1 et 10 fois celui de la granulométrie des poudres P à doser, et la proportion en masse volumique des poudres P vérifiant l'équation (i) suivante :

$$(i) : 10\% < [\text{poudres}]_{vol} < 80\%,$$

dans laquelle $[\text{poudres}]_{vol}$ est la proportion en masse volumique des poudres P.

Une étape b) est alors mise en œuvre de mélange et mise en suspension des poudres P avec le fluide cryogénique FC et le dioxyde de carbone sous forme solide $CO_2(s)$, suivie d'une étape c) d'évacuation de la suspension cryogénique SC, comprenant le soutirage de la suspension cryogénique SC, dans des conditions de température supérieure ou égale à la température ambiante et de pression inférieure ou égale à la pression atmosphérique.

Une étape d) permet le pilotage du dosage des poudres P en fonction d'un ou plusieurs paramètres Co liés à l'étape b) de mélange et mise en suspension, et une étape e) assure le dosage des poudres P.

Le système de mélange et de mise en suspension S2 des poudres P, du fluide cryogénique FC et du dioxyde de carbone sous forme solide $CO_2(s)$ pour l'obtention d'une suspension cryogénique SC peut notamment comporter au moins en partie les éléments des dispositifs décrits dans les demandes de brevet français FR 3 042 985 A1 et FR 3 042 986 A1.

Ce système S2 comprend une cuve de mélange 41. La cuve de mélange 41 est calorifugée, isolée thermiquement, pour permettre de conserver le gaz liquéfié sous forme d'azote liquide sans volatisation excessive. Idéalement, les pertes thermiques seraient de l'ordre de 2% par jour voire moins.

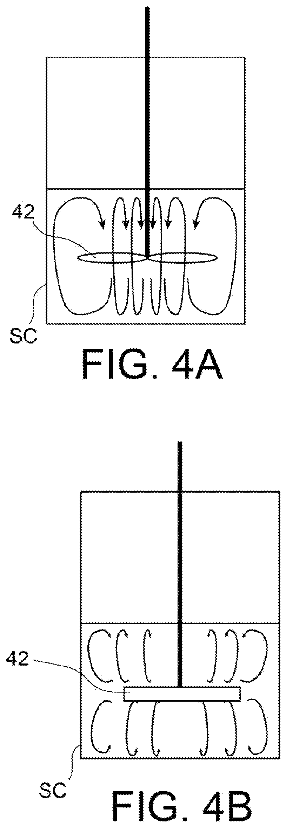

Également, le système S2 comprend un dispositif de mélange et de brassage 42, situé à l'intérieur de la cuve de mélange 41. Ce dispositif de mélange et de brassage 42 peut notamment être un mobile d'agitation, par exemple de type pale, hélice, turbine, ancre, attriteur ou autres, choisi notamment en fonction de la viscosité de la suspension cryogénique SC envisagée. Il peut s'agir de tout autre profilé éventuellement assisté par un ou des systèmes d'agitation acoustiques, tels que cannes d'agitation ultrasoniques par exemple. Le dispositif de mélange et de brassage 42 peut par exemple être un mobile d'agitation de type pale comme représenté sur la figure 4A, ou encore un mobile d'agitation de type turbine comme représenté sur la figure 4B, ou encore un élément poreux de distribution avec une injection d'azote liquéfié $N_2(l)$ comme représenté sur la figure 4C.

Le dispositif de mélange et de brassage 42 est entraîné en rotation pour générer l'agitation par le biais d'un moteur d'entraînement 45. Ce moteur 45 incorpore un moyen de mesure de couple Co de la suspension cryogénique SC afin d'identifier si la suspension est homogène, le couple Co étant alors sensiblement constant avec une variabilité inférieure à 10 %, voire 5 %, et le taux de charge adapté. Ce dispositif de mélange et de brassage 42 peut encore être complété par un système d'agitation ultrasonique 98, par exemple une sonotrode d'agitation, pour éviter une éventuelle accumulation en fond de cuve 41, et/ou par l'utilisation d'un flux ascendant de gaz inerte chimique, tel que de l'azote, pour favoriser le brassage en fonction du milieu granulaire à doser.

Les moyens d'introduction contrôlée 43a, 43b des poudres P à doser et du dioxyde de carbone sous forme solide $CO_2(s)$ dans la cuve de mélange 41 comprennent tout particulièrement un premier trémie d'alimentation 43a pour l'introduction des poudres P à doser et un deuxième trémie d'alimentation 43b pour l'introduction du dioxyde de carbone sous forme solide $CO_2(s)$. L'introduction contrôlée se fait par pesée ou dosage. Pour ce faire, les trémies d'alimentation 43a, 43b sont utilisés en lien avec respectivement des systèmes de pesée 46a, 46b correspondant à des balances suspendues ou pesons. Il est ainsi possible de suivre la masse introduite en fonction du temps.

En outre, le système d'alimentation S1 comporte un premier réservoir d'alimentation 71 en azote liquide, calorifugé, et un deuxième réservoir d'alimentation 72 en azote sous forme de gaz comprimé. De plus, un débitmètre massique 74 est présent au niveau de la cuve de mélange 41, par exemple de type à effet Coriolis ou ultrasonique.

Il faut noter qu'en fonction de la spécificité du milieu granulaire à transporter, à savoir la suspension cryogénique, notamment en fonction de sa granulométrie et de sa densité, les proportions de poudres P, éventuellement de dioxyde de carbone sous forme solide $CO_2(s)$ et d'azote liquide peuvent varier. Toutefois, afin d'obtenir une suspension cryogénique SC qui soit stable et pompable au sens des définitions données précédemment, la proportion en masse volumique des poudres P vérifie l'équation (i) suivante : (i) : 10% < [poudres]$_{vol}$ < 80%, dans laquelle [poudres]$_{vol}$ est la proportion en masse volumique des poudres P.

Sur la figure 2, il est en outre à noter la présence d'une vanne 101 pour la mise en surpression et permettant l'alimentation en azote gazeux pour la mise en pression de la cuve 41 ; et la présence d'une vanne à trois voies 102 permettant un prélèvement en ligne pour le diagnostic granulométrique.

Dans l'optique d'obtenir une suspension cryogénique SC qui soit pompable et stable au sens de l'invention, les paramètres majeurs à déterminer et/ou à suivre sont :

- le taux de charge des poudres P, à savoir le volume de solide sur le volume total de la suspension SC : on cherchera avantageusement à augmenter ce taux à une valeur la plus importante possible pour optimiser la quantité de poudres P dosée pour un volume de suspension cryogénique SC déplacé donné ;
- éventuellement, le taux de charge du dioxyde de carbone sous forme solide $CO_2(s)$ : ce taux est classiquement fonction de la quantité de poudres P à introduire dans la suspension cryogénique SC ;
- la densité des poudres P à doser : de manière générale, plus les poudres P seront denses et à forte granulométrie, plus on cherchera à constituer des suspensions visqueuses incorporant des quantités importantes de dioxyde de carbone $CO_2(s)$ pour limiter les risques de décantation des poudres P à doser au sein de la suspension cryogénique SC ;
- éventuellement la granulométrie du dioxyde de carbone sous forme solide $CO_2(s)$, donnée notamment par le diamètre moyen de la distribution granulométrique du dioxyde de carbone dont on dispose pour formuler la suspension cryogénique SC ;
- la granulométrie des poudres P donnée notamment par le diamètre moyen de la distribution granulométrique du milieu granulaire à transporter.

Aussi, de façon avantageuse :

- la granulométrie du dioxyde de carbone sous forme solide $CO_2(s)$ est liée à celle des poudres P à doser : le diamètre moyen étant environ entre 0,1 et 10 fois la granulométrie des poudres P à doser, voire entre 1 et 8 fois, voire encore entre 2 et 6 fois la granulométrie des poudres P à doser ;
- le taux de charge en dioxyde de carbone sous forme solide $CO_2(s)$ est lié à celui des poudres P à doser : plus précisément, il est sensiblement du même ordre de grandeur, la valeur étant comprise entre environ 0,1 et 10 fois la teneur en poudres à doser ;

- la teneur en azote liquide est autant que possible limitée : elle est avantageusement inférieure à 70% volumique ; cette teneur en azote liquide doit néanmoins permettre de rendre coulable la suspension et ne peut être inférieure à 5% volumique ;

- la granulométrie de la phase solide, comprenant les poudres P à doser et ici le dioxyde de carbone sous forme solide $CO_2(s)$, est inférieure à 10 fois le diamètre de la tuyauterie de transport sans quoi des ségrégations pourraient s'opérer et faire perdre l'intégrité du milieu granulaire à doser.

Avantageusement, la granulométrie de la glace carbonique peut être comprise entre 500 et 900 $\mu$m.

Au sujet de la suspension de poudres P dans le fluide cryogénique FC, il est nécessaire de maîtriser l'homogénéité de répartition des poudre P car cela correspond à maîtriser la masse dosée. En effet, on peut exprimer comme suit l'incertitude du débit dosé en fonction de l'incertitude sur l'homogénéité, ou plus précisément sur la variance par l'équation (ii) :

$$dM/M = dQ/Q + dV/V + dt/t \ \ (ii),$$

où :

M représente la masse dosée,
Q représente le débit massique,
V représente la variance, et
t représente le temps de dosage.

Afin de garantir une bonne homogénéité, soit une variance V faible, voire proche de zéro idéalement, il est nécessaire d'assurer une agitation de type réacteur parfaitement agité au sein de la cuve 41 de formation de la suspension cryogénique. Autrement dit, en chaque point du volume de la cuve 41, idéalement, il y a la même concentration de poudres P. Ainsi en sortie de cuve 41, la concentration en poudres P correspond à la concentration moyenne dans la cuve 41 et l'on maîtrise ainsi la masse de poudres P dosées en maîtrisant le temps de dosage par le biais de cette équation (ii).

Par ailleurs, le système S2 comprend un moyen de mesure 44 du niveau de la suspension cryogénique SC formée, au moins en partie situé à l'intérieur de la cuve de mélange 41. Plus particulièrement, ce moyen de mesure 44 peut prendre la forme d'une canne de bullage ou d'une sonde ultrasonore.

Avantageusement, le système S2 comprend également un système de surveillance optique 94 pour contrôler l'homogénéité de concentration dans la suspension cryogénique SC. Celui-ci peut correspondre à un fluxmètre couplé à une diode Laser ou une caméra avec analyse d'image pour identification de l'homogénéité de concentration de particules en ligne. Il est associé à une pompe péristaltique 95 permettant la circulation de la suspension vers le système de surveillance optique 94.

Par ailleurs, le système d'évacuation S3 comprend une conduite calorifugée 53 qui permet le transport de la suspension formulée tout en limitant les pertes thermiques jusqu'au point d'arrivée. La longueur de la conduite calorifugée 53 doit être choisie de telle sorte que le temps de parcours doit être très inférieur au temps de stabilité de la solution, notamment de l'ordre au moins d'un facteur 10. La conduite 53 est associée à un débitmètre massique 90, de type à effet Coriolis ou ultrasonore par exemple.

Le dispositif de soutirage et de volatilisation 91, 92 du système d'évacuation S3 comprend aussi un dispositif d'échangeur et évaporateur 92 qui permet l'échange et l'évaporation de la phase d'azote liquéfié $N_2(l)$. La suspension cryogénique SC est ainsi évacuée continuellement par le biais de la mise en pression au sein de la cuve d'élaboration 41 pour assurer un soutirage aisé et contrôlé. Il comporte également un élément poreux, appelé poral, 92 qui correspond à un tube d'évacuation de la vapeur d'azote tout en permettant l'inertage ou gainage du débouchant pour éviter la formation de bouchon de givre au droit du débouchant.

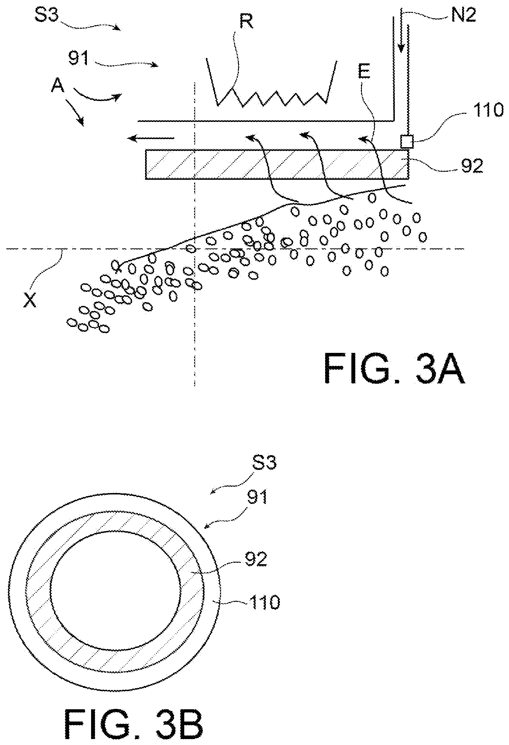

Les figures 3A et 3B permettent d'illustrer le principe de volatisation et d'évaporation de la suspension cryogénique SC. Sur ces figures, les références Sp, A, X et Sp représentent respectivement la surface de la suspension cryogénique, l'air en circulation à proximité, l'axe de symétrie et une résistance chauffante. De plus, un joint d'étanchéité 110 est prévu.

Pour stabiliser la suspension cryogénique SC, il est aussi possible de charger électro statiquement les poudres P à doser. Pour ce faire, les poudres P peuvent être préalablement soumises à une différence de potentiel électrique important ou peuvent être chargées par frottement induit dans un récipient dont l'oscillation va créer des frottements paroi contre poudres chargeant ces dernières en fonction de la nature de la paroi du récipient utilisé.

En outre, pour assurer un bon brassage par effet mécanique, il est nécessaire de mettre en rotation le mobile d'agitation 42 de telle sorte à ce qu'il permette de ne pas laisser de poudres en contact avec la paroi du fond de cuve 41. La vitesse minimale de rotation du mobile 42 doit au moins induire des turbulences dont la vitesse est supérieure à la vitesse de décollement. Par « vitesse de décollement », on entend une vitesse de la phase liquide d'une suspension pour laquelle se produit le phénomène de décollement. Pour résumer, le phénomène de décollement est un phénomène qui s'applique à une couche limite laminaire et qui est souvent à l'origine de la turbulence car il produit des zones potentiellement instables. Lors du décollement, le point de vitesse nulle qui était initialement collé à la paroi se retrouve en volume : c'est le décollement, et une nouvelle couche limite de vitesse retour apparaît sur la paroi. Il est préconisé par Mersmann, dans l'article "Theoretical prediction of the minimum stirrer speed in mechanically agitated suspensions", Mersmann A., Werner F., Maurer S., Bartosch K., Chem. Eng. Process., vol. 37, pp. 503-510, 1998, d'imposer une vitesse de rotation ($N_{min}$) du mobile d'agitation 42 au moins égale à une valeur pouvant s'exprimer par la relation suivante:

$$N_{min} = 5,1 N_p^{-7/18} \cdot \left(\frac{D_T}{D}\right)^{3/2} \cdot \left(\frac{d_p g \left| \rho_S - \rho_L \right|}{D^3 \rho_L}\right)^{1/3}$$

dans laquelle :

$N_{min}$ représente la vitesse minimale d'agitation ;
Np représente le nombre de puissance (paramètre évaluable en fonction du type de mobile d'agitation) ;
$D_T$ représente le diamètre du mobile d'agitation ;
D représente le diamètre de la cuve d'agitation ;
dp représente le diamètre des particules de poudres ;
g représente l'unité de pesanteur ;
$\rho_s$ représente la masse volumique des poudres ; et
$\rho_L$ représente la masse volumique du gaz liquéfié.

Pour assurer un bon brassage par fluidisation, la phase gaz liquéfié doit avoir une vitesse superficielle, comparativement à celle des poudres P, suffisante qui dépend de la granulométrie du milieu granulaire à fluidiser et notamment des propriétés physico-chimiques du gaz liquéfié. Plus précisément encore, la vitesse superficielle minimale à assurer doit avoir la valeur minimale de fluidisation $u_{mF}$. Cette vitesse est exprimée grâce à la relation suivante reliant le nombre de Reynolds à celui d'Archimède :

$$Re_{mF} = \sqrt{C_1^2 + C_2 \cdot Ar} - C_1$$

où

$$Re_{mF} = \frac{\rho_L \cdot u_{mF} \cdot d_p}{\mu} \quad \text{et} \quad Ar = \frac{d_p^2 \cdot g \cdot \rho_L \left(\rho_s - \rho_L\right)}{\mu^2}$$

avec :

$$C_1 = 3 \cdot (1 - \varepsilon_{mF}) \cdot \frac{h_K}{h_B} \quad \text{et} \quad C_2 = \frac{\varepsilon_{mF}^3}{6 \cdot h_B}$$

$\varepsilon_{mF}$ représente la porosité du lit de poudres à fluidiser ; et
hk et hB sont des coefficients correspondant à la configuration du système à considérer.

Ainsi, par exemple, pour un lit de poudres pouvant être considéré comme sphérique : $\varepsilon_{mF} \approx 0,4$, avec hK $\approx 4,2$ et hB $\approx 0,3$, on a C1 $\approx 25$ et C2 $\approx 0,04$.

De plus, la suspension peut être stabilisée par l'usage de dioxyde de carbone solide $CO_2(s)$ ou alors par l'application de charges électrostatiques. Les poudres P sont alors chargées par des porteurs de charges de même signe et le gaz liquéfié étant neutre, les grains de poudres en se rapprochant naturellement par sédimentation vont se repousser du fait de la répulsion électrostatique et donc conserver un étant d'équilibre au niveau de la dispersion.

Aussi, le chargement électrostatique des poudres P peut se faire par triboélectricité ou chargement par décharge. Pour ce qui concerne le chargement électrostatique par tribologie, les poudres sont placées dans un réservoir dont la nature est choisie de telle sorte qu'un transfert d'électrons puisse se faire entre les poudres P et les parois du réservoir rentrant en contact avec ces dernières. Le transfert est possible et plus ou moins aisé en fonction du potentiel de charge de chacune des matières rentrant en frottement l'une contre l'autre .

Par ailleurs, le système de pilotage S4 de l'évacuation de la suspension cryogénique SC permet notamment l'évacuation de la suspension cryogénique SC en fonction d'au moins un paramètre lié au système S2 de mélange et de mise en suspension, en particulier le couple Co. Le système de pilotage S4 permet de compiler l'ensemble des mesures réalisées sur le dispositif 30 de dosage des poudres P, et permet les actions de pilotage ou rétroactions sur les organes pilotables, tels que vannes, pompe, moteur d'agitation, etc.

Ainsi, le système de pilotage S4 intègre l'acquisition et le traitement de plusieurs données :

- la mesure de la quantité de matières de la glace carbonique MCO2 et des poudres Mpoudre, ainsi que du fluide cryogénique FC, de sorte à évaluer les teneurs volumiques et/ou massiques des constituants de la suspension cryogénique SC ;
- la mesure du niveau de la cuve de mélange 41 pour éviter son engorgement et évaluer la masse volumique de la suspension cryogénique SC formée ;
- la mesure du couple d'agitation Co permettant d'évaluer la viscosité de la suspension cryogénique SC et permettant de vérifier que celle-ci est homogène et suffisamment agitée ;
- la mesure optique pour la concentration en solide au sein de la cuve 41 ;
- la mesure de pression pour régler le débit de mouvement de la suspension mesuré par débitmètre massique.

En outre, afin de réaliser une suspension homogène et permettre un dosage précis des poudres à distribuer, il est possible de distinguer trois stratégies possibles.

Premièrement, l'élaboration de suspension diluée. C'est le cas privilégié pour des poudres de faible granulométrie et de faible densité. Le seuil de concentration volumique en poudres à doser dans le fluide cryogénique FC peut être compris dans l'intervalle ]0 ; 10%] pour ce type de suspension. La stabilisation de la suspension par charge électrostatique est envisageable pour ces cas de solution diluée.

Deuxièmement, l'élaboration de suspension dense. C'est le cas à privilégier pour des poudres à plus forte granulométrie et à forte densité. Le seuil de concentration volumique en poudres à doser dans le fluide cryogénique FC peut être compris dans l'intervalle ]20% ; 80%] pour ce type de suspension. La stabilisation de la suspension par stabilité électrostatique devient peu aisée à partie de 20 % de taux d'incorporation de solide dans la suspension. Pour stabiliser la suspension, à partir de ces seuils (ordre de grandeur puisque dépendant non pas seulement de la concentration mais de la granulométrie et de la densité des poudres notamment), il est envisageable de stabiliser les suspensions par encombrement stérique et augmentation de viscosité de la suspension en en introduisant du dioxyde de carbone solide $CO_2(s)$.

Troisièmement, l'élaboration de suspension de densité intermédiaire. Le seuil de concentration volumique en poudres à doser dans le fluide cryogénique FC peut être compris dans l'intervalle ]10% ; 20%] pour ce type de suspension. Dans ce cas de figure, une combinaison des moyens d'agitation mécanique et/ou ultrasonore et/ou par flux convectif est à envisager.

Il faut noter que la vitesse d'agitation doit permettre d'atteindre un niveau de turbulence suffisant. A noter que lorsque les particules sont décollées vis-à-vis du fond de la cuve 41, on cherche à éviter la stagnation de particules en fond de cuve et avec un niveau de turbulence encore supérieur, il est visé l'obtention d'une distribution homogène des particules dans le volume de la suspension. C'est cette homogénéité de répartition de particules dans la suspension que la présente invention permet d'obtenir.

Aussi, pour une mise en suspension complète, à savoir lorsqu'aucune particule ne reste au fond de la cuve 41 agitée, il faut que toute les particules soient décollées et que le redépôt soit rendu impossible.

Cependant, pour obtenir une suspension homogène, il est nécessaire de pousser la vitesse d'agitation sachant cependant que l'homogénéité idéale de la phase solide disposée dans la suspension constitue une asymptote. A noter qu'en pratique, une suspension avec un nombre d'Archimède supérieur à 10 ne peut atteindre l'homogénéité complète.

Généralement, il existe un compromis entre homogénéité et énergie à introduire dans la suspension sous forme de turbulence. La vitesse d'agitation optimale correspondant à ce compromis est de l'ordre de 1,8 à 2 fois la valeur de la vitesse minimale d'agitation.

L'ensemble de ces prescriptions doit permettre d'optimiser l'homogénéité des poudres P pour un volume de suspension cryogénique donné et optimisé, tout en garantissant la possibilité de mettre en œuvre la suspension par mise en pression. Ceci se traduit par une viscosité limitée, de l'ordre de 100 000 mPa.s, et la formulation d'une suspension adaptée à la tuyauterie d'évacuation au droit du doseur.

Concernant le paramètre de couple d'agitation Co, la figure 5 représente graphiquement la valeur du couple d'agitation Co en fonction du temps t. Les références A0, A1, A2 et A3 correspondent respectivement au couple à vide, à un premier ajout de charge solide, à un deuxième ajout de charge solide et à un troisième ajout de charge solide. Ainsi, à chaque introduction de matière A1, A2 et A3, le couple Co augmente pour une vitesse d'agitation donnée. Toutefois, après une certaine durée d'agitation, le couple Co tend à se stabiliser comme le montrent les paliers sur la figure 5. Ceci permet alors d'introduire éventuellement une quantité supplémentaire de poudres P dans la suspension cryogénique SC si la consigne de débit de transport l'impose, par exemple.

Par le biais des figures 6 et 7, on décrit le comportement rhéologique de plusieurs suspensions cryogéniques SC envisageables dans le cadre de l'invention.

Précisément, la figure 6 représente l'évolution de la viscosité v, exprimée en mPa.s, en fonction du taux de cisaillement tc, exprimé en $s^{-1}$, pour des suspensions d'alumine ($Al_2O_3$), glace carbonique dans l'azote liquide.

La figure 6 illustre le comportement rhéologique de trois systèmes : $Al_2O_3/CO_2$ : suspension d'azote liquide contenant près de 10 % (volumique) de $Al_2O_3$ et 48 % (volumique) de $CO_2$ solide ; $CO_2$ : suspension d'azote liquide contenant 48 % de $CO_2$ solide ; et $Al_2O_3$ : suspension d'azote liquide contenant 10 % de $Al_2O_3$.

Cette courbe expérimentale permet d'indiquer que les viscosités des suspensions considérées montrent des propriétés rhéologiques gérables en terme de circulation et d'agitation, à savoir que la viscosité n'est pas trop élevée pour être pompable ou que l'on puisse agiter sans dépense énergétique trop importante. Par ailleurs, ces éléments expérimentaux acquis par les inventeurs montrent que les comportements des suspensions considérées peuvent s'apparenter dans la gamme expérimentale considérée à des fluides newtoniens.

La figure 7 représente par ailleurs l'évolution de la viscosité v, exprimée en mPa.s, en fonction du taux de cisaillement tc, exprimé en $s^{-1}$, pour différentes concentrations de suspensions de glace carbonique dans l'azote liquide.

Précisément, la figure 7 illustre le comportement rhéologique de cinq systèmes : 34 % : suspension d'azote liquide contenant près de 34 % (massique) de $CO_2$ solide ; 48 % : suspension d'azote liquide contenant près de 48 % (massique) de $CO_2$ solide ; 51,8 % : suspension d'azote liquide contenant près de 51,8 % (massique) de $CO_2$ solide ; 64 % : suspension d'azote liquide contenant près de 64 % (massique) de $CO_2$ solide ; 77,6 % : suspension d'azote liquide contenant près de 77,6 % (massique) de $CO_2$ solide.

Cette courbe expérimentale permet d'indiquer que les viscosités des suspensions considérées montrent des propriétés rhéologiques gérables en terme de circulation et d'agitation, à savoir une viscosité pas trop élevée pour être pompable ou que l'on puisse agiter sans dépense énergétique trop importante. Cet aspect n'est pas trivial au vu notamment de la proportion importante de solide constitutive de ces suspensions. Par ailleurs, ces éléments expérimentaux acquis par les inventeurs montrent que les comportements des suspensions considérées peuvent s'apparenter dans la gamme expérimentale considérée à des fluides newtoniens, ce qui permet un pilotage et une maîtrise plus consolidée du procédé.

En conséquence, les figures 6 et 7 permettent d'illustrer les viscosités des suspensions cryogéniques et de montrer l'influence de la teneur en glace carbonique sur la viscosité du fluide à transférer.

Généralement, le comportement rhéologique des suspensions cryogéniques SC peut s'approcher par des lois semi-empiriques. A titre d'exemple, il peut être donné ci-après une expression de la viscosité de suspension en fonction du taux de charge et de la granulométrie du solide constitutif de cette suspension par l'équation (ii) :

$$(ii) : \mu/\mu_0 = (1 + \tfrac{1}{2}\cdot[N]\cdot\Phi/(1-\Phi/\Phi_m)^2,$$

où :

    $\mu$ est la viscosité de la suspension ;
    $\mu_0$ est la viscosité de la phase liquide ;
    [N] est une constante ;
    $\Phi$ est le volume de solide dans le volume de la suspension ;
    $\Phi_m$ est le volume maximal de solide dans le volume de la suspension.

Connaissant la viscosité des suspensions, il est alors possible d'en déduire le débit de distribution Qv du doseur possible en fonction de la surpression à appliquer au sein de la cuve pour assurer un débit conforme à la consigne de dosage des poudres. On peut ainsi obtenir l'équation (iii) donnée ci-après :

$$(iii) : \Delta P = (8\cdot\mu\cdot L)\cdot Qv/(\pi\cdot R^4),$$

où :

    $\Delta P$ est la différence de pression entre amont et aval du débitmètre ;
    $\mu$ est la viscosité de la suspension ;

Qv est le débit volumique ;

R est le rayon de la conduite de transport du fluide ;

L est la longueur de la conduite de transport.

L'invention n'est bien entendu pas limitée aux exemples de réalisation qui viennent d'être décrits. Diverses modifications peuvent y être apportées par l'homme du métier.

**Revendications**

1. Procédé de dosage de poudres (P) non coulables, **caractérisé en ce qu'**il comporte les étapes suivantes:

   a) introduction d'un fluide cryogénique (FC), de poudres (P) à doser et de dioxyde de carbone sous forme solide ($CO_2(s)$) dans un système de mélange et de mise en suspension (S2), le diamètre moyen de la granulométrie du dioxyde de carbone sous forme solide ($CO_2(s)$) étant compris entre 0,1 et 10 fois celui de la granulométrie des poudres (P) à doser,
   b) mélange et mise en suspension des poudres (P) avec le fluide cryogénique (FC) et le dioxyde de carbone sous forme solide ($CO_2(s)$), pour l'obtention d'une suspension cryogénique (SC), la proportion en masse volumique des poudres (P) vérifiant l'équation (i) suivante :

$$(i) : 10\% < [\text{poudres}]_{vol} < 80\%,$$

   où :
   $[\text{poudres}]_{vol}$ est la proportion en masse volumique des poudres (P),
   c) évacuation de la suspension cryogénique (SC), comprenant le soutirage de la suspension cryogénique (SC), dans des conditions de température supérieure ou égale à la température ambiante et de pression inférieure ou égale à la pression atmosphérique,
   d) pilotage du dosage des poudres (P) en fonction d'un ou plusieurs paramètres (Co) liés à l'étape b) de mélange et mise en suspension,
   e) dosage des poudres (P).

2. Procédé selon la revendication 1, **caractérisé en ce que** la première étape a) comporte les sous-étapes successives suivantes :

   a1) introduction du fluide cryogénique (FC) et du dioxyde de carbone sous forme solide ($CO_2(s)$) dans le système de mélange et de mise en suspension (S2), puis
   a2) introduction de poudres (P) à doser dans le système de mélange et de mise en suspension (S2).

3. Procédé selon la revendication 1 ou 2, **caractérisé en ce que** le diamètre moyen de la granulométrie du dioxyde de carbone sous forme solide ($CO_2(s)$) est compris entre 1 et 8 fois celui de la granulométrie des poudres (P) à doser, notamment entre 2 et 6 fois celui de la granulométrie des poudres (P) à doser.

4. Procédé selon l'une des revendications précédentes, **caractérisé en ce que** le taux de charge en dioxyde de carbone sous forme solide ($CO_2(s)$) est compris entre 0,1 et 10 fois celui en poudres (P) à doser.

5. Procédé selon l'une quelconque des revendications précédentes, **caractérisé en ce que** l'étape d) de pilotage du dosage des poudres (P) permet l'acquisition et le traitement de la mesure du couple d'agitation (Co) de la suspension cryogénique (SC), pour permettre une ou plusieurs actions de pilotage sur un ou plusieurs organes pilotables.

6. Procédé selon l'une quelconque des revendications précédentes, **caractérisé en ce que** le fluide cryogénique (FC) est de l'azote liquide.

7. Procédé selon l'une quelconque des revendications précédentes, **caractérisé en ce que** le dioxyde de carbone solide ($CO_2(s)$) se présente sous forme de granulés et/ou de poudres.

8. Dispositif (30) de dosage de poudres (P) non coulables pour la mise en œuvre du procédé de dosage de poudres (P) non coulables selon l'une quelconque des revendications précédentes, **caractérisé en ce qu'**il comporte :

- un système d'alimentation (S1) en poudres (P), en dioxyde de carbone sous forme solide ($CO_2$(s)) et en fluide cryogénique (FC), comportant des moyens d'introduction contrôlée (43a) des poudres (P) à doser et des moyens d'introduction contrôlée (43b) de dioxyde de carbone sous forme solide ($CO_2$(s)),

- un système de mélange et de mise en suspension (S2) des poudres (P), du dioxyde de carbone sous forme solide ($CO_2$(s)) et du fluide cryogénique (FC) pour l'obtention d'une suspension cryogénique (SC),

- un système d'évacuation (S3) de la suspension cryogénique (SC), comprenant un dispositif de soutirage (91, 92) de la suspension cryogénique (SC) associé à un débitmètre massique (90), lequel dispositif de soutirage est configuré pour soutirer la suspension cryogénique dans des conditions de température supérieure ou égale à la température ambiante et de pression inférieure ou égale à la pression atmosphérique,

- un système de pilotage (S4) du dosage des poudres (P), configuré pour

d'une part piloter le système (S1) d'alimentation en poudres, en dioxyde de carbone sous forme solide et en fluide cryogénique de façon à ce que la proportion ([poudres]$_{vol}$) en masse volumique des poudres (P) vérifie l'équation (i) suivante :

$$10\% < [poudres]_{vol} < 80\%,$$

et d'autre part piloter le dosage des poudres (P) en fonction d'un ou plusieurs paramètres (Co) liés à l'étape b) de mélange et mise en suspension.

9. Dispositif selon la revendication 8, **caractérisé en ce que** le système de mélange et de mise en suspension (S2) comprend :

- une cuve de mélange (41),
- un dispositif de mélange et de brassage (42), situé à l'intérieur de la cuve de mélange (41),
- un moyen de mesure (44) du niveau de la suspension cryogénique (SC) formée, au moins en partie situé à l'intérieur de la cuve de mélange (41).

10. Dispositif selon la revendication 8 ou 9, **caractérisé en ce que** le système de mélange et de mise en suspension (S2) comprend un système de surveillance optique (94) pour contrôler l'homogénéité de concentration dans la suspension cryogénique (SC).

**Patentansprüche**

1. Verfahren zum Dosieren von nicht gießbaren Pulvern (P), **dadurch gekennzeichnet, dass** es folgende Schritte aufweist:

a) Einführen eines Kryofluids (FC), von zu dosierenden Pulvern (P) und Kohlendioxid in fester Form ($CO_2$(s)) in ein System zum Mischen und zum Suspendieren (S2), wobei der mittlere Durchmesser der Korngröße des Kohlendioxids in fester Form ($CO_2$(s)) zwischen dem 0,1- und 10-Fachen der Korngröße der zu dosierenden Pulver (P) liegt,

b) Mischen und Suspendieren der Pulver (P) mit dem Kryofluid (FC) und Kohlendioxid in fester Form ($CO_2$(s)), um eine Kryosuspension (SC) zu erhalten, wobei das Massenvolumenverhältnis der Pulver (P) der folgenden Gleichung (i) entspricht:

$$(i): 10\ \% < [Pulver]_{vol} < 80\ \%,$$

wobei:

[Pulver]$_{vol}$ das Massenvolumenverhältnis der Pulver (P) ist,

c) Abführen der Kryosuspension (SC), das das Entnehmen der Kryosuspension (SC) unter Bedingungen mit einer Temperatur größer oder gleich der Umgebungstemperatur und einem Druck kleiner oder gleich dem Atmosphärendruck umfasst,

d) Steuern der Dosierung der Pulver (P) in Abhängigkeit von einem oder mehreren Parametern (Co), die mit dem Schritt b) Mischen und Suspendieren verbunden sind,

e) Dosieren der Pulver (P).

2. Verfahren nach Anspruch 1, **dadurch gekennzeichnet, dass** Schritt d) die folgenden Unterschritte aufweist:

   a1) Einführen des Kryofluids (FC) und des Kohlendioxids in fester Form ($CO_2$(s)) in das System zum Mischen und zum Suspendieren (S2), dann
   a2) Einführen von zu dosierenden Pulvern (P) in das System zum Mischen und zum Suspendieren (S2).

3. Verfahren nach Anspruch 1 oder 2, **dadurch gekennzeichnet, dass** der mittlere Durchmesser der Korngröße des Kohlendioxids in fester Form ($CO_2$(s)) zwischen dem 1- und 8-Fachen der Korngröße der zu dosierenden Pulver (P) liegt, insbesondere zwischen dem 2- und 6-Fachen der Korngröße der zu dosierenden Pulver (P).

4. Verfahren nach einem der vorhergehenden Ansprüche, **dadurch gekennzeichnet, dass** der Füllgehalt an Kohlendioxid in fester Form ($CO_2$(s)) zwischen dem 0,1-Fachen und dem 10-Fachen desjenigen der zu dosierenden Pulver (P) liegt.

5. Verfahren nach einem der vorhergehenden Ansprüche, **dadurch gekennzeichnet, dass** der Schritt d) zum Steuern der Dosierung der Pulver (P) das Erfassen und Verarbeiten der Messung des Rührmoments (Co) der Kryosuspension (SC) ermöglicht, um eine oder mehrere Steueraktionen an einem oder mehreren steuerbaren Elementen zu ermöglichen.

6. Verfahren nach einem der vorhergehenden Ansprüche, **dadurch gekennzeichnet, dass** das Kryofluid (FC) flüssiger Stickstoff ist.

7. Verfahren nach einem der vorhergehenden Ansprüche, **dadurch gekennzeichnet, dass** das feste Kohlendioxid ($CO_2$(s)) in Form von Granulaten und/oder Pulvern vorliegt.

8. Vorrichtung (30) zum Dosieren von nicht gießbaren Pulvern (P) zum Durchführen des Verfahrens zum Dosieren von nicht gießbaren Pulvern (P) nach einem der vorhergehenden Ansprüche, **dadurch gekennzeichnet, dass** sie Folgendes aufweist:

   - ein System zum Zuführen (S1) von Pulvern (P), von Kohlendioxid in fester Form ($CO_2$(s)) und von Kryofluid (FC), das Mittel für das kontrollierte Einführen (43a) der zu dosierenden Pulver (P) und Mittel für das kontrollierte Einführen (43b) von Kohlendioxid in fester Form ($CO_2$(s)) aufweist,
   - ein System zum Mischen und zum Suspendieren (S2) der Pulver (P), des Kohlendioxids in fester Form ($CO_2$(s)) und des Kryofluids (FC) zum Erhalten einer Kryosuspension (SC),
   - ein System zum Abführen (S3) der Kryosuspension (SC), umfassend eine Entnahmevorrichtung (91, 92) der Kryosuspension (SC) in Verbindung mit einem Massendurchflussmesser (90), wobei die Entnahmevorrichtung so eingerichtet ist, dass sie die Kryosuspension unter Bedingungen mit einer Temperatur größer oder gleich der Umgebungstemperatur und einem Druck kleiner oder gleich dem Atmosphärendruck entnimmt,
   - ein System zum Steuern (S4) der Pulverdosierung (P), das so eingerichtet ist, dass es einerseits das System zum Zuführen (S1) von Pulvern, von Kohlendioxid in fester Form und von Kryofluid steuert, so dass das Massenvolumenverhältnis ($[Pulver]_{vol}$) der Pulver (P) der folgenden Gleichung (i) entspricht:

$$10 \ \% \ < \ [Pulver]_{vol} \ < \ 80 \ \%,$$

   und andererseits die Pulverdosierung (P) in Abhängigkeit von einem oder mehreren Parametern (Co) steuert, die mit dem Schritt b) Mischen und Suspendieren verbunden sind.

9. Vorrichtung nach Anspruch 8, **dadurch gekennzeichnet, dass** das System zum Mischen und zum Suspendieren (S2) Folgendes umfasst:

   - einen Mischbehälter (41),
   - eine Misch- und Rührvorrichtung (42), die sich in dem Mischbehälter (41) befindet,
   - ein Messmittel (44) für den Füllstand der gebildeten Kryosuspension (SC), das sich mindestens teilweise in dem Inneren des Mischbehälters (41) befindet.

10. Vorrichtung nach Anspruch 8 oder 9, **dadurch gekennzeichnet, dass** das System zum Mischen und zum Suspendieren (S2) ein optisches Überwachungssystem (94) zum Kontrollieren der Konzentrationshomogenität in der Kryosuspension (SC) umfasst.

**Claims**

1.  Method for dosing non-flowable powders (P), **characterised in that** it includes the following steps:

    a) adding a cryogenic fluid (FC), powders (P) to be dosed and carbon dioxide in solid form ($CO_2(s)$) in a mixing and suspension system (S2), the mean particle diameter of the carbon dioxide in solid form ($CO_2(s)$) being between 0.1 and 10 times that of the particle size of the powders (P) to be dosed,
    b) mixing and suspending the powders (P) with the cryogenic fluid (FC) and the carbon dioxide in solid form ($CO_2(s)$), to obtain a cryogenic suspension (SC), the density percentage of the powders (P) verifying the following equation (i):

    $$(i): 10\% < [powders]_{vol} < 80\%,$$

    where:
    $[powders]_{vol}$ is the density percentage of the powders (P),
    c) removing the cryogenic suspension (SC), comprising the extraction of the cryogenic suspension (SC), under conditions of temperature greater than or equal to ambient temperature and pressure less than or equal to atmospheric pressure,
    d) controlling the dosage of the powders (P) according to one or more parameters (Co) linked with mixing and suspending step b),
    e) dosing the powders (P).

2.  The method according to claim 1, **characterised in that** the first step a) includes the following successive sub-steps:

    a1) adding the cryogenic fluid (FC) and carbon dioxide in solid form ($CO_2(s)$) in the mixing and suspension system (S2), then
    a2) adding the powders (P) to be dosed in the mixing and suspension system (S2).

3.  The method according to claim 1 or 2, **characterised in that** the mean particle diameter of the carbon dioxide in solid form ($CO_2(s)$) is between 1 and 8 times that of the powders (P) to be dosed, in particular between 2 and 6 times the mean particle diameter of the powders (P) to the dosed.

4.  The method according to one of the preceding claims, **characterised in that** the load ratio of carbon dioxide in solid form ($CO_2(s)$) is between 0.1 and 10 times that of the powders (P) to be dosed.

5.  The method according to any one of the preceding claims, **characterised in that** step d) of controlling the dosing of the powders (P) involves the acquisition and processing of the measurement of the stirring torque (Co) of the cryogenic suspension (SC), to allow one or more controlling actions on one or more controllable members.

6.  The method according to any one of the preceding claims, **characterised in that** the cryogenic fluid (FC) is liquid nitrogen.

7.  The method according to any one of the preceding claims, **characterised in that** the carbon dioxide in solid form ($CO_2(s)$) is presented in the form of granules and/or powders.

8.  A device (30) for dosing non-flowable powders (P) for the implementation of the method for dosing non-flowable powders (P) according to any one of the preceding claims, **characterised in that** it includes:

    - a system (S1) for supplying powders (P), carbon dioxide in solid form ($CO_2(s)$) and cryogenic fluid (FC), including controlled adding means (43a) of the powders (P) to be dosed and controlled adding means (43b) of carbon dioxide in solid form ($CO_2(s)$),
    - a system (S2) for mixing and suspending the powders (P), the carbon dioxide in solid form ($CO_2(s)$) and the cryogenic fluid (FC) to obtain a cryogenic suspension (SC),
    - a system (S3) for removing the cryogenic suspension (SC), comprising a device (91, 92) for extracting the cryogenic suspension (SC) associated with a mass flowmeter (90), wherein said extraction device is configured to extract the cryogenic suspension under conditions of temperature greater than or equal to ambient temperature and pressure less than or equal to atmospheric pressure,
- a system (S4) for controlling the dosing of the powders (P), configured to

on the one hand, control the system (S1) for supplying powders, carbon dioxide in solid form and cryogenic fluid such that the density percentage ([powders]$_{vol}$) of the powders (P) verifies the following equation (i):

$$10\% < [powders]_{vol} < 80\%,$$

and on the other hand, control the dosing of the powders (P) according to one or more parameters (Co) linked with mixing and suspending step b).

9. The device according to claim 8, **characterised in that** the mixing and suspension system (S2) comprises:

- a mixing tank (41),
- a mixing and stirring device (42), located inside the mixing tank (41),
- a means (44) for measuring the level of the cryogenic suspension (SC) formed, at least in part located inside the mixing tank (41).

10. The device according to claim 8 or 9, **characterised in that** the mixing and suspension system (S2) comprises an optical monitoring system (94) for checking the concentration homogeneity in the cryogenic suspension (SC).

Données de sortie

Non — Test Débit massique — Oui — Poursuite transfert — Non — Seuil — Arrêt

Itération *

Masse de poudre à introduire dans trémie

Masse de CO2 à introduire dans trémie

Masse N2(L) à introduire dans mélangeur

Mesure du couple/Variance de concentration
Stabilité du couple et variance

Mesure du couple/variante de la concentration
Stabilité du couple et Variance

Non — Test — Oui

Mesure de débit

Consignes/actions intermédiaires

Consigne masse de poudre à doser

Calcul

Itération *
Introduction part de solide/liquide

Agitation

Itération *
Temporisation poursuite Mélange ou Rajout de solide/liquide

Itération *
Mise en Pression/ouverture de vanne de débit

Données d'entrée

Densité de la poudre à doser
Granulométrie de la poudre
Granulométrie du CO2(s)

FIG. 1

17

FIG. 2

FIG. 3A

FIG. 3B

42

SC

FIG. 4A

42

SC

FIG. 4B

SC

42

$N_2(L)$

FIG. 4C

Co

A3

A2

A1

A0

t

FIG. 5

FIG. 6

FIG. 7

EP 4 554 709 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3072307 A1
- FR 3072308 A1
- EP 0732643 A
- FR 3042985 A1
- FR 3042986 A1

**Littérature non-brevet citée dans la description**

- **CLAUDE SAUDEMONT**. Manutention mécanique continue de produit en vrac. *Techniques de l'ingénieur*, 10 July 2002
- **K. SALEH** ; **P. GUIGON**. Caractérisation et analyse des poudres - Propriétés physiques des solides divisés. *Techniques de l'Ingénieur*, 10 March 2009
- **JOHN DODDS** ; **GÉRARD BALUAIS**. Caractérisation de la taille des particules. *Sciences Géologiques*, 1993, 79-104
- **MERSMANN A** ; **WERNER F** ; **MAURER S.** ; **BARTOSCH K**. Theoretical prediction of the minimum stirrer speed in mechanically agitated suspensions. *Chem. Eng. Process*, 1998, vol. 37, 503-510